Europäisches Patentamt

European Patent Office

Office européen des brevets

(11) Publication number: 0 375 434
A2

# (12) EUROPEAN PATENT APPLICATION

(21) Application number: 89313456.9

(22) Date of filing: 21.12.89

(51) Int. Cl.⁵: H04N 1/04

(30) Priority: 23.12.88 US 289847

(43) Date of publication of application:
27.06.90 Bulletin 90/26

(84) Designated Contracting States:
DE FR GB

(71) Applicant: XEROX CORPORATION
Xerox Square - 020
Rochester New York 14644(US)

(72) Inventor: Curry, Douglas N.
221 Leland Avenue
Menlo Park California 94025(US)

(74) Representative: Weatherald, Keith Baynes et al
Rank Xerox Limited Patent Department 364
Euston Road
London NW1 3BL(GB)

(54) Digital printers.

(57) The bit clock for a digital printer having a flying spot scanner is generated by an arithmetic frequency synthesizer (24) which has its operating point updated, at predetermined spatial locations during each scan cycle, by scanner-specific, bit clock frequency correction values which are serially applied to the frequency synthesizer for spatially linearizing the frequency of the bit clock while the scanner is scanning successive segments or partitions of its scan field. The correction values are "scanner-specific" because they are computed to adjust the temporal frequency of the bit clock as required to compensate for measured variations in the average linear speed at whch the scanner scans the successive segments of its scan field, including variations caused by optical aberrations of the scan optics.

FIG. 3

## Digital Printer

This invention relates to arithmetic frequency synthesizers for generating bit clocks for digital printers having flying spot scanners and, more particularly, to methods and means for spatially linearizing such bit clocks with respect to the scan fields of such scanners.

Arithmetic frequency synthesizers, such as described in commonly assigned US-A-4,766,560 are well suited for use as adjustable-frequency bit clock generators for digital printing because they provide linear frequency control over a wide dynamic range. They characteristically include an accumulator for recursively accumulating an R-bit long binary input word having a time-dependent value N at a preselected, stable reference frequency, $F_R$. Therefore, the most-significant bit (MSB) of the accumuland (i.e., the word accumulated by the accumulator) oscillates at a frequency, $F_{BC}$ (herein referred to as the "bit clock frequency") which is given for any value of N within the range $-2^{R-1} \leq N < 2^{R-1}$ by:

$$F_{BC} = F_R \left( \frac{N}{2^R} \right) \qquad (1)$$

US-A-4,766,560 discloses a suitable implementation for such an arithmetic frequency synthesizer.

As is known, flying spot scanners commonly are employed for digital printing. Such a scanner conventionally comprises a reflective, multi-faceted prism which is rotated about its central axis to sweep one or more intensity modulated light beams cyclically across a photosensitive record medium in a fast-scan (i.e., line scan) direction. While that is occurring, the record medium is advanced in an orthogonal slow-scan (i .e., process) direction. Each of the light beams is intensity modulated in accordance with a serial data sample stream at a rate determined by a bit clock frequency, so the record medium is exposed to the image represented by the data samples while being scanned in a raster pattern. Although this disclosure will be simplified by concentrating on single beam scanners, it is to be understood that that the present invention also can be applied to multibeam scanners.

Digital printers of the foregoing type customarily have start-of-scan detectors for synchronously resynchronizing their bit clocks at the beginning of each scan cycle, thereby reducing pixel positioning errors caused by bit clock phase jitter. Thus, when an arithmetic frequency synthesizer is employed for generating the bit clock, its accumulator typically is initialized from a zero or "cleared" state in response to a start-of-scan pulse from the start-of-scan detector at the start of each scan cycle, The start-of-an detector normally is spataly positioned in the scan path of the light beam, at a specified distance ahead of the lead edge of the scan field, so a predetermined number of bit clock pulses typically are generated during an initial phase of each scan cycle, while the light beam is scanning from the start of scan detector to the lead edge of the scan field.

US-A-4,766,560 teaches that the value N of the input word for the accumulator of an arithmetic frequency synthesizer can be varied as a function of time for adjusting the bit clock frequency, to compensate for (1) variations in the angular speed at which the prism is rotated ("motor hunt errors"), (2) variations in the angular speed at which different facets of the prism sweep the light beam across the scan field ("polygon signature errors"), and/or (3) variations in the linear velocity at which the light beam is scanned across different segments of the scan field ("scan non-linearity errors"). The purpose of such compensation is to stabilize the spatial frequency of the bit clock with respect to the scan field of the scanner during each scan (scan non-linearity compensation) and from scan-to-scan (motor hunt compensation and polygon signature compensation). Scan non-linearity errors are time-invariant for all scans by a given scanner, while polygon signature errors are time-invariant for all scans by a given facet of the prism. Motor hunt errors, on the other hand, customarily vary at low frequency from scan-to-scan.

This invention is concerned with compensating for scan non-linearity errors, so it is to be understood that those errors are caused by variations in the linear scan displacement of the light beam per unit angle rotation of the polygon. Modern flying spot scanners conventionally include $F(\Theta)$ lenses to compensate for the geometrical scan non-linearities that tend to occur because of variations in their optical arm lengths as measured from their prisms to different spatial locations in their scan fields. However, these lenses are costly to design and fabricate with the precision that is required to compensate fully for scan non-linearities, especially if correction is required over a wide scan angle, such as in a compact printer having a wide, flat scan field. Moreover, the scan optics of such a scanner typically have various optical aberrations which sometimes cause significant scan non-linearities. Optical scan linearization does not compensate for these non-linearities.

Therefore, methods and means are required for spatially linearizing the bit clock generated by an arithmetic frequency synthesizer with respect to the scan field of a flying spot scanner, so that the scan non-linearity compensation proposed by US-A- 4,766,560 can be implemented with readily repeatable precision. If desired, a F(Θ) lens or the like may be employed to compensate at least partially for scan non-linearity errors, but it still is desirable to make provision for controlling the frequency of an arithmetic synthesizer so as to compensate for any residual scan non-linearities that may exist.

To that end, in accordance with the present invention, the bit clock for a digital printer having a flying spot scanner is generated by an arithmetic frequency synthesizer which has its operating point updated, at predetermined spatial locations during each scan cycle, by scanner-specific, bit clock frequency correction values which are serially applied to the frequency synthesizer for spatially linearizing the frequency of the bit clock while the scanner is scanning successive segments or partitions of its scan field. This causes the bit clock to have a generally uniform spatial density with respect to the scan field, despite the usual scan non-linearities of such a scanner. The correction values are "scanner-specific" because they are computed to adjust the temporal frequency of the bit clock as required to compensate for measured variations in the average linear speed at which the scanner scans the successive segments of its scan field, including variations caused by optical aberrations of the scan optics.

Additional features and advantages of this invention will become apparent when the following detailed description is read in conjunction with the accompanying drawings, in which:

Figure 1 is a simplified schematic diagram of a digital printer having a flying spot scanner;

Figure 2 is a simplified plan view of the scanner shown in Fig. 1 to illustrate schematically its usual scan non-linearities in the absence of any compensation;

Figure 3 is similar to Fig. 2, but it schematically illustrates the spatial linearization of the bit clock that is generated by an arithmetic frequency synthesizer of the present invention;

Figure 4 is a simplified block diagram of the arithmetic frequency synthesizer shown in Fig. 3, and

Figure 5 illustrates a test set-up for determining the scan non-linearities of a scanner and for computing scanner-specific correction values for spatially linearizing the bit clock that is generated by the arithmetic frequency synthesizer so as to compensate for those particular non-linearities.

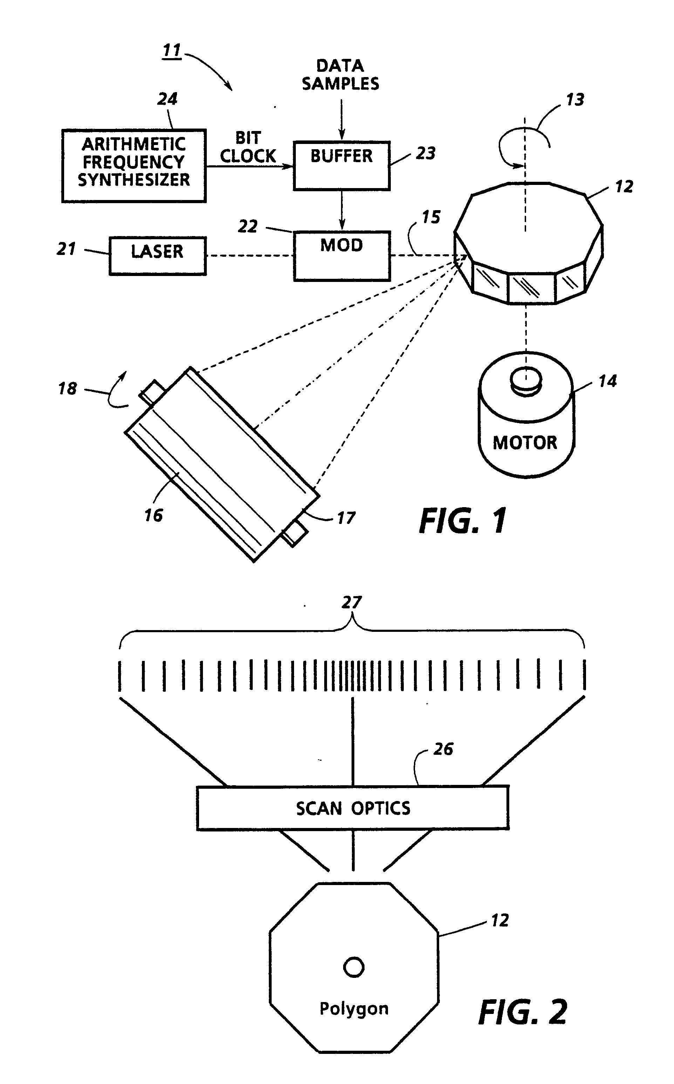

Turning now to the drawings, and at this point especially to Fig. 1, there is a more or less conventional digital printer 10 (shown only in relevant part) having a flying spot scanner 11, which comprises a reflective, multi-faceted prism 12 that is rotated about its central axis, as indicated by the arrow 13, by a motor 14 to sweep an incident, intensity-modulated light beam 15 cyclically in a fast-scan or "line scanning" direction across a photosensitive record medium 16, such as a xerographic photoreceptor. The record medium 16, in turn, is advanced simultaneously (by means not shown) in an orthogonal slow scan or "process" direction, so the light beam 15 exposes it in accordance with a raster scanning pattern. As illustrated, the record medium 16 is coated on a drum 17 which is rotated about its longitudinal axis, as indicated by the arrow 18, but this is only one of many possible printer configurations.

As a general rule, the light beam 15 is supplied by a laser 21 and is intensity modulated by a modulator 22 in accordance with data samples which are serially applied to the modulator 22 by a scan buffer 23 or the like at a rate determined by the frequency, of a bit clock generated by an arithmetic frequency synthesizer 24. The data samples represent individual dots of a halftone image or pixels of a simple image (collectively referred to herein as "pixels"), so the bit clock frequency, controls the positioning of the pixels on the record medium 16.

Referring to Fig. 2, it will be seen that the geometric variables of the scanner 11, such as the differences in the lengths of the optical arms which extend from its prism 12 to the record medium 16 at different spatial locations across the scan field (for example, as shown, the optical arm to the center of the scan field is significantly shorter than the optical arm to either of the opposite extremes of the scan field), tend to cause the linear scan speed of the light beam 15 to vary more or less smoothly as it is scanned across the scan field. As previously pointed out, the scan optics 26 of the scanner 11 may optically compensate to an extent for these geometric scan non-linearities, but in the absence of such compensation, or if the optical correction is incomplete, a bit clock having a constant temporal frequency will cause pixels to be printed at a lower density near the extremes of the scan field and at a higher density near its center, as indicated at 27. Moreover, even if complete optical compensation for these geometric non-linearities is provided, the scan optics 26 may have optical aberrations which cause scan non-linearities of their own.

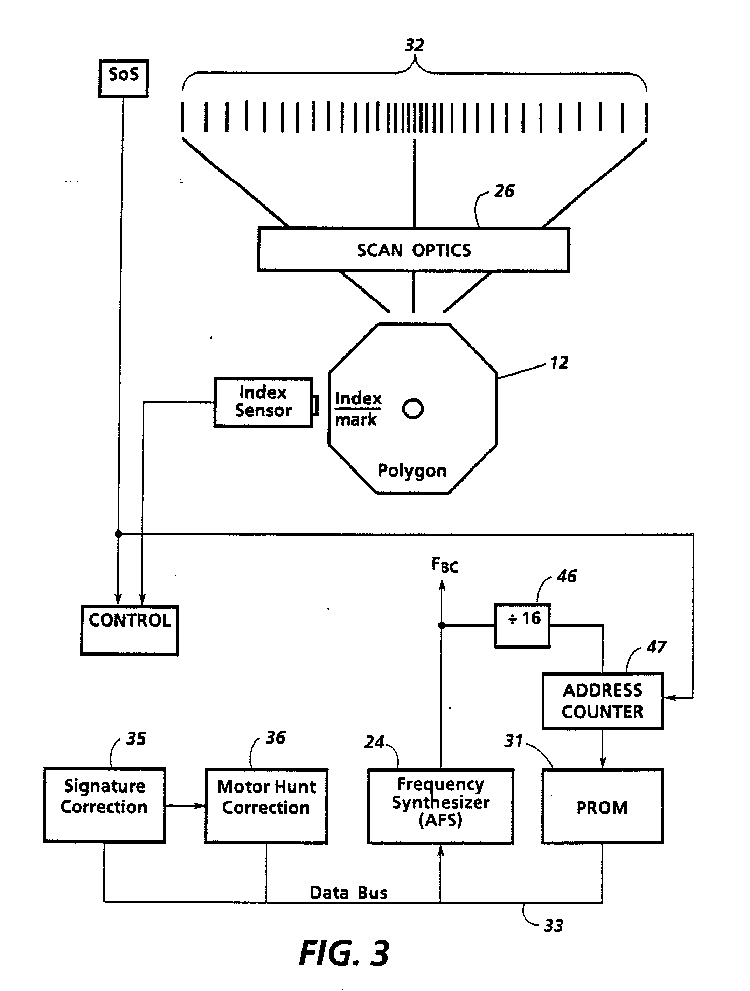

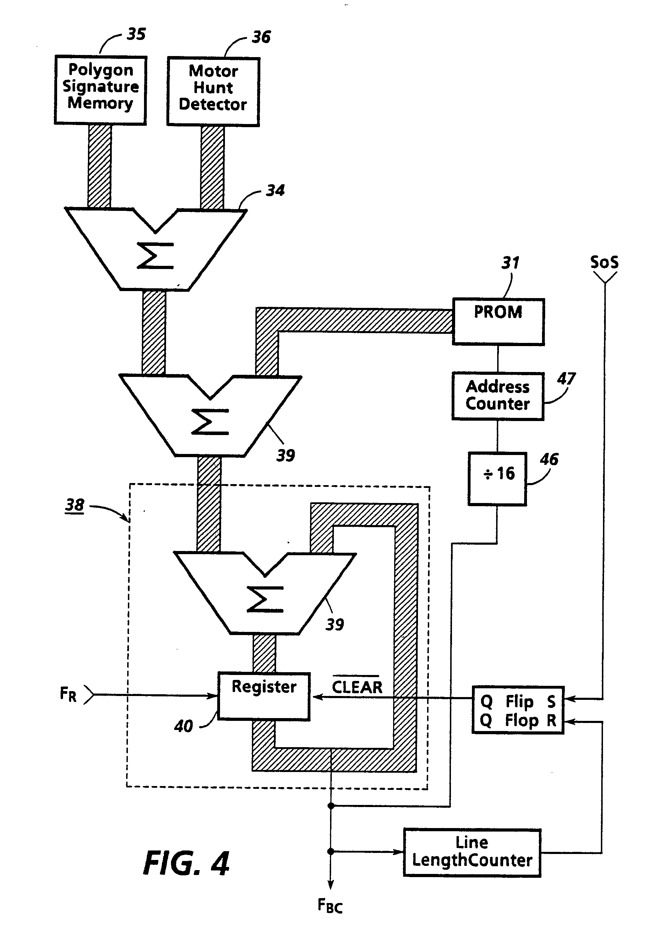

Thus, in accordance with the present invention, as shown in Fig. 3, scanner specific correction values are serially retrieved from a programmable read-only memory (PROM) 31, at spatially predetermined locations during each scan cycle, for updating the operating point of the frequency synthesizer 24, thereby spatially linearizing the frequency, of the bit clock it generates with respect to the scan field of the scanner 11, as at 32, in timed synchronism with the scanning of successive segments or partitions of the scan field. Suitably, a data bus 33 carries these correction values from the PROM 31 to the frequency synthesizer 24, where each of them is summed, by an adder 34 (Fig. 4), with a polygon signature correction value from a signature correction memory 35 and with a motor hunt correction value from a motor hunt detector 36. The scan non-linearity correction values sequentially update the value N of the R-bit long input word for the frequency synthesizer 24 during each scan cycle as the scanner 11 begins to scan successive segments of its scan field. In contrast, the polygon signature correction value and the motor hunt correction value are updated just once at the start of each scan cycle, so they typically are summed with each other in another adder 37 (Fig. 4) before being combined with the current scan nonlinearity correction value.

As illustrated in Fig. 4 and as more fully described in US-A-4,766,560, the frequency synthesizer 24 has an accumulator 38 for recursively accumulating the R-bit long input word which is applied to it at a predetermined reference frequency $F_R$. To perform that function, the accumulator 37 includes a dual inlet, R-bit wide adder 39, which has one of its inlet connected to receive the input word from the adder 34, and its outlet returned to the other of its inlets by a R-bit wide register 40. As will be seen, the register 40 is clocked at the reference frequency $F_R$ so the MSB of the accumuland provided by the accumulator 38 oscillates at the bit clock frequency, given by equation (1) above for all values of 11 within the range $-2^{R-1} \leq N < 2^{R-1}$.

Returning for a moment to equation (1) and to Fig. 3, it will be understood that the precision of the bit clock linearization which is achieved in accordance with this invention is dependent on the frequency $F_R$ of the reference clock and on the spatial resolution at which the scan field is subdivided for linearizing the bit clock. One correction value is provided for each subdivision of the scan field, so the precision of the linearization increases as the length in bit clocks (hereinafter referred to as the "bit clock length") of the scan field subdivisions decreases. However, the bit clock usually can be spatially linearized with sufficient precision for most practical applications when the scan field is more coarsely subdivided into segments which span several bit clock positions (i. e., pixel positions), such as sixteen positions. As will be appreciated, the advantage of a coarser scan field segmentation is that fewer correction values are needed, thereby reducing the effort that is required to compute them, as well as the memory capacity that is required to store them.

Suitably, the correction values (including one or more initial values which are applied to the frequency synthesizer 24 during the initial phase of each scan cycle, prior to the entry of the light beam 15 into the scan field) are stored in serial order in adjacent address spaces within the PROM 31. They then can be cyclically retrieved, in serial order at appropriate times during each scan cycle, by employing the start-of-scan pulse to reset an address counter 47, at the start of each scan cycle, to the address of the first correction value in the PROM 31 and by providing a divider 46 for incrementing the address counter 47 at a segment bit clock length equivalent submultiple (e. g., one sixteenth) of the clock bit frequency, $F_{BC}$, to read out the other correction values sequentially from the PROM 31 as the scanner 11 passes from the initial partition or segment of its scan cycle into one after another of the following partitions or segments. In passing, it is noted that when a systolic array (not shown, but described in US-A-4,766,560) is used to add the accumuland of the accumulator 38 recursively (Fig. 4) with its input word value N, a synchronizer (not shown) is required to increment the address counter 47 in timed synchronism with the readout of the MSB of the accumuland from the register 40, but that additional level of detail is not required for a fundamental understanding of this invention.

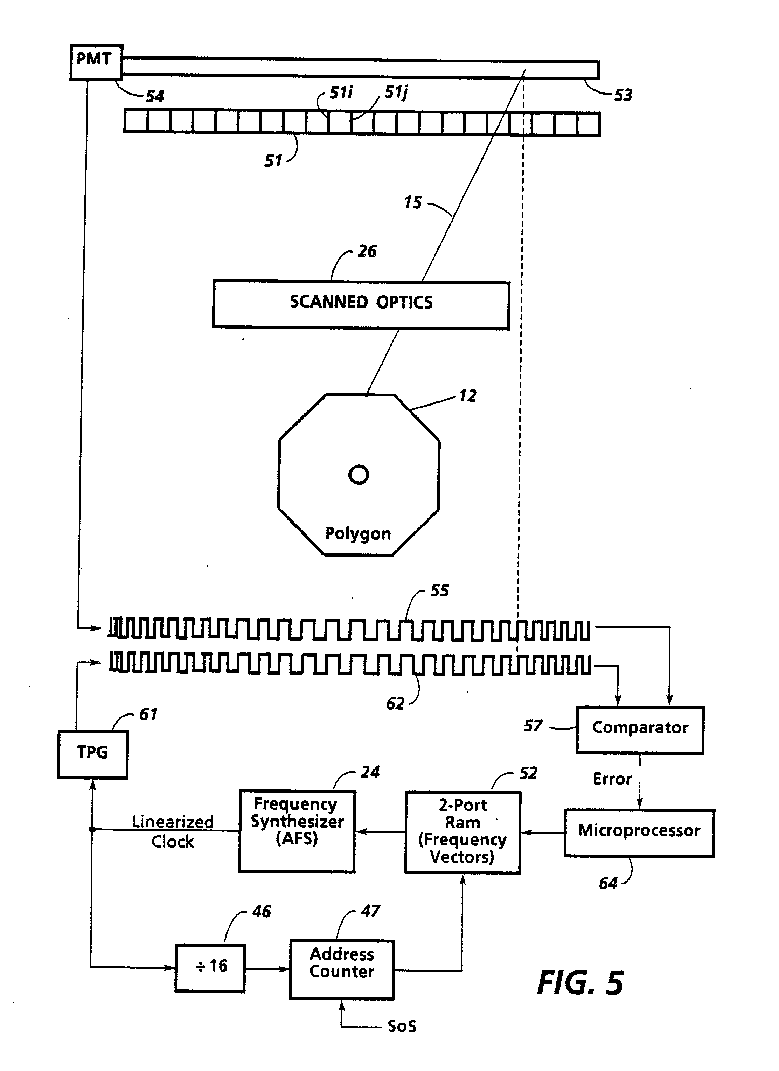

Referring to Fig. 5, in keeping with this invention, provision is made for determining the scan non-linearities of the scanner 11 and for computing scanner specific non-linearity correction values for the arithmetic frequency synthesizer 24 in situ during a preliminary set-up process. More particularly, to carry out this set-up process, the scanner 11 scans an essentially constant intensity light beam, at a predetermined nominal angular speed, across an elongated optical grating 51 which is aligned in the image plane of the scanner 11 to extend across its scan field in overlapping relationship with the lead and trail edges of the scan field. The grating 51 has a substantially constant spatial frequency, so it intensity modulates the light beam at a frequency which varies in accordance with any variations in the average linear speed at which the light beam scans between its neighboring line pairs, such as 51i and 51j. Apart from some non-uniformity that may exist immediately adjacent the lead and trail edges of the scan field, the neighboring line pairs of the grating 51 span respective scan field segments of uniform length, so the frequency modulation of the light beam is a generally accurate measure of the scan non-linearities of the scanner 11 at a spatial resolution that is determined by the spatial frequency of the grating 51. This modulated light beam, in turn, is collected by a lightpipe 53 or the like, which guides it to a suitable photodetector, such as a photomultiplier 54, where it is converted into a pulse train 55. Consequently, the pulse train 55 is frequency-modulated in accordance with the grating resolved scan non-linearities of the scanner 11, so it is applied to one inlet of a phase comparator 57, thereby providing a scanner-specific reference for use in computing scanner-specific scan non-linearity correction values for the frequency synthesizer 24.

A digital printer typically is designed to print a given number of pixels on each scan line, so the spatial frequency of the grating 51 determines a clock bit count target for each of the scan field segments it resolves (e.g., sixteen clock bits per resolved segment). This bit count target, in turn, determines the number of correction values that are required for updating the operating point of frequency synthesizer 24 at an equivalent bit clock rate. However, a somewhat larger number of correction values are preloaded into adjacent address spaces within a dual port RAM 52 to be serially retrieved by the divider 46 and the address counter 47 during each scan cycle, substantially as previously described, thereby providing correction values for the respective segments of the scan field, as well as for the initial and the "flyback" portions of each scan cycle. All of these correction values initially have a predetermined nominal value, which is selected to cause the frequency synthesizer 24 to operate at a nominal bit clock frequency $F_{BC_{nom}}$.

To adjust the correction values individually as required to compensate for the measured scan non-linearities of the scanner 11, the bit clock generated by the arithmetic frequency synthesizer 24 is applied to a test pattern generator 61, thereby causing it to generate a test pulse train 62, which is applied to the phase comparator 57 for comparison against the scanner-specific reference pulse train 55. The test pulse train 62 cycles at the so-called segment bit count equivalent bit clock rate (e.g., at one sixteenth of the bit clock frequency, $F_{BC}$, if the grating 51 establishes a targeted count of sixteen bits for the respective scan field segments), so it is first phased with, and then frequency matched to, the scanner-specific pulse train 55 to establish scanner-specific scan non-linearity correction values for the frequency synthesizer 24.

More particularly, the test pulse train 62 is phase aligned with a lead edge of the reference pulse train 55, such as by uniformly adjusting all of the correction values that are read out of the RAM 52 before the lead edge of the reference pulse train 55 is received. As a practical matter, these essentially are the correction values that determine the frequency, of the bit clock while the scanner 11 is scanning from its start-of-scan detector to a point near the lead edge of its scan field. Various anomalies, such as diffraction from the leading edge of the grating 51, may cause the pulse train 55 to have some initial instability, so the "lead edge" of the pulse train 55 is selected to ensure that any such instabilities have settled out.

After the test pulse train 62 is phase aligned with the reference pulse train 55, the transitional frequencies of those two pulse trains are compared by the comparator 57 to produce an error signal which causes a microprocessor 64 to adjust one after another of the non-linearity correction values as they are being read out by the RAM 52, so that the transitions of the test pulse train 62 are frequency matched to the corresponding transitions of the reference pulse train 55. Once computed, these scanner-specific non-linearity correction values are time-invariant for the given scanner 11, so they suitably are transferred from the RAM 52 to corresponding addresses within the PROM 31 (Fig. 3) to spatially linearize the bit clock generated by the frequency synthesizer with respect to the scan field of the scanner 11 while digital printing is being performed.

## Claims

1. A digital printer including
an arithmetic frequency synthesizer (24) having an accumulator for recursively accumulating a R-bit long input word of value, N, where $-2^{R-1} \leq N < 2^R$, to provide an accumuland with a most-significant bit oscillating at a bit clock frequency proportional to the value N;
a flying spot scanner for cyclically scanning a light beam across a photosensitive record medium (16) to print images on the record medium in a predetermined scan field;
a data store coupled to said arithmetic frequency synthesizer for storing scanner-specific scan non-linearity correction values, and
addressing means coupled to the store for cyclically reading out the correction values in predetermined serial order during each scan cycle, whereby the value N of the input word is updated by certain of the correction values as the scanner begins to scan successive segments of the scan field, thereby spatially linearizing the bit clock with respect to the scan field.

**FIG. 1**

**FIG. 2**

**FIG. 3**

**FIG. 4**

EP 0 375 434 A2

FIG. 5